# EUROPÄISCHE PATENTSCHRIFT

(11) **EP 2 070 676 B1**
(45) Veröffentlichungstag und Bekanntmachung des Hinweises auf die Patenterteilung: **17.11.2010**
(21) Anmeldenummer: 08170918.0
(22) Anmeldetag: 08.12.2008
(51) Int. Cl.: B29C 33/62, C10M 107/38, C10M 173/02

(54) **Trennmittel, insbesondere Trennmittel für Silikonkautschuke, Verfahren zur Herstellung und Verwendung**
Release agent , especially for silicon rubber, method for manufacture and use
Agent de séparation, notamment pour caoutchouc de silicone, procédé de fabrication et utilisation

(30) Priorität: 13.12.2007 DE 102007059989
(43) Veröffentlichungstag der Anmeldung: 17.06.2009
(73) Patentinhaber: Münch Chemie International GmbH, 69469 Weinheim (DE)
(72) Erfinder: Münch, Michael, 69488 Birkenau (DE); Drossmann, Sebastian, 69469 Weinheim (DE)
(74) Vertreter: Meissner, Bolte & Partner

(56) Entgegenhaltungen:
- EP-A- 0 733 666
- EP-A- 0 894 838
- EP-A- 1 134 276

## Beschreibung

Die Erfindung betrifft ein Trennmittel, insbesondere Trennmittel für Silikonkautschuke, gemäß dem Oberbegriff des Patentanspruchs 1, ein Verfahren zur Herstellung eines solchen Trennmittels gemäß dem Oberbegriff des Patentanspruchs 9 und eine Verwendung eines solchen Trennmittels gemäß dem Oberbegriff des Patentanspruchs 12.

Aus der Praxis ist bekannt, dass bei der Fertigung von Elastomerbauteilen Trennmittel eingesetzt werden, welche zusammen mit dem jeweiligen Elastomer harmonieren müssen. Durch die Vielzahl der auf den Markt befindlichen Elastomere gestaltet es sich bisher schwierig ein universelles Trennmittel für nahezu alle Elastomere einzusetzen. Auf Grund des chemischen Aufbaus der eingesetzten Elastomere treten Indifferenzen in Form von Unverträglichkeiten bezüglich des zu verarbeitenden Elastomers und des chemischen Aufbaus des Trennmittels auf, was sich durch Anhaftung, Formverschmutzung, Risse in den Bauteilen sowie niedrige Standzeiten (Fertigungszyklen) äußert.

Dies ist dann umso problematischer, wenn beispielsweise Bauteile aus VMQ-(Silikonkautschuke) und/oder FVMQ- (Fluorsilikonkautschuke) -Elastomeren gefertigt werden sollen.

Gemäß dem derzeitigen Stand der Technik werden diese Elastomere mittels einfachen Seifenlösungen, nämlich Fettsäuremetallsalzen getrennt, was erhebliche Nachteile mit sich bringt. Einmal müssen nach jedem Fertigungszyklus die Metalloberflächen mit Seifenlösung neu appliziert werden, da mit diesen Seifenlösungen nur eine einmalige Trennung bewirkt wird. Zudem treten bei Verwendung dieser Seifenlösungen erhebliche Fließfehler und Formverschmutzungen auf, was erhöhte Produktionskosten durch lange Stillstandszeiten bewirkt, da die Metallwerkzeuge oft gereinigt werden müssen.

Die derzeit auf dem Markt befindlichen Trennmittel sind nahezu alle nach dem gleichen Schema aufgebaut. Es sind meist wässrige und/oder lösemittelhaltige Gemische in Form von Emulsionen aus funktionellen und/oder nicht funktionellen Polydimethylsiloxanen und/oder Silanen mit gegebenenfalls verschiedenen Funktionalitäten und/oder Mischungen davon. Die Problematik beim Einsatz dieser aus dem Stand der Technik bekannten Trennmittel besteht darin, dass für nahezu jedes Elastomer eine eigene Abmischung, d.h. ein jeweils nur für ein bestimmtes Elastomer geeignetes Trennmittelprodukt, kreiert werden muss. So können beispielsweise VMQ-Elastomere nicht mit silikonhaltigen Trennmitteln getrennt werden, da hier chemische Reaktionen auf der Oberfläche stattfinden, welche eine Anhaftung zwischen Trennmittelschicht und Elastomer verursacht.

Auch bei Hydriertem Acrylnitrilbutadien-Kautschuk (HNBR), Ethylen-Propylen-Dien-Kautschuk (EPDM), Butyl-Kautschuk (IIR), Chloropren-Kautschuk (CR), Chlorsulfoniertem Polyethylen (CSM) und dergeleichen Elastomeren treten derartige Probleme auf, da auch hier chemische Reaktionen zwischen silikonhaltigem Trennmittel mit polaren Gruppen im Elastomer (z.B. CSM = Chlorsulfoniertes Polyethylen) stattfinden und somit lange Standzeiten der Metallwerkzeuge nicht erzielt werden können.

Eine weitere Problematik besteht darin, dass immer mehr Elastomerbauteile mit Trennmitteln gefertigt werden müssen, welche absolut silikonfrei aufgebaut sind. Da diese Bauteile vorwiegend in den Automobilbereich wandern, dürfen keinerlei Silikonrückstände auf dem Elastomerbauteil nachweisbar sein. Die derzeit auf dem Markt erhältlichen silikonfreien Trennmittel sind nahezu alle auf Alkylsulfonaten und/oder Alkylarylsulfonaten und/oder Mischungen davon aufgebaut. Nachteile dieser Komponenten sind eine niedrige Standzeit, da nach jedem Fertigungszyklus appliziert werden muss sowie sich schnell bildende Formverschmutzungen, was wiederum hohe Produktionskosten mit sich zieht.

So ist aus der EP 1 134 276 A1 eine Schmiermittelzusammensetzung auf PTFE-Basis für Getriebe bekannt, die bei der Herstellung von Formteilen eingesetzt werden kann.

Die US 6,322,850 B1 offenbart ein Trennmittelgemisch aus mindestens einem von sieben reaktiven Silanen, einem emulgiertem multifunktionellem Polydimethylsiloxan, einem kompatiblen Emulgator (Tensid), Ethanol und Wasser als vorwiegender Komponente. Die dortige Offenbarung beschreibt, dass das reaktive Produkt auf heiße Werkzeugoberflächen appliziert wird, um eine semipermanente Trennmittelschicht für Mehrfachentformungen von Elastomeren zu erzeugen. Bei Anwendung auf kalten Oberflächen muss diese Oberfläche in nachteiligerweise und zeitaufwendig allerdings zunächst vonm Wasser befreit und getrocknet werden. Die dortige Druckschrift beschreibt ein wasserbasiertes anstelle eines lösemittelhaltigen Trennmittels, um Elastomerbauteile aus Urethanen, Naturkautschuken, Silikonen, Neopren usw. fertigen zu können. Auch eine Verwendung von Fuorpolymeren, wie Zonyl FSO und Zonyl FS-300 der Firma DuPont als ethoxylierte nichtionische Fluortenside als kompatible Tenside in den Abmischungen wird erwähnt aber nicht näher beschrieben. Die Verwendung des Fluortensids FC-430 der Firma 3M als aliphatischer Fluorpolymerester wird zwar in den Beispielrezepturen mit einer Konzentration von 0,449 Gew.-% erwähnt, dient jedoch nur als Netzmittel für Metalloberflächen. Ein Nachteil der dort aufgeführten Abmischungen besteht darin, dass nicht alle Elastomere getrennt werden können, wobei Bauteile aus Silikonkautschuk (VMQ) mit dortigen Rezepturen nicht gefertigt werden können, da die dort vorhandenen reaktiven Silane und multifunktionellen Polydimethylsiloxane auch chemische Reaktionen mit VMQ eingehen und eine Trennung ausgeschlossen werden kann.

Die US 2006/0102050 A1 offenbart ein bei Raumtemperatur vernetzendes wasserbasiertes semipermanentes Trennmittel, welches in der Lage ist, mehrfache Entformungen von Polymeren, wie Polyester, mit einmaliger Applikation bei 5 - 40°C der Oberfläche zu gewährleisten. Die dortige Druckschrift beschreibt die Verwendung von amino- und hydroxyfunktionellen Polydimethylsiloxanen emulgiert in Wasser mit Anteilen an nicht-funktionellen Siloxanen als Gleitmittel. Ein Nachteil des dort beschriebenen Verfahrens besteht darin, dass mit dortigem Trennmittel nicht alle Elastomere, vor allem nicht silikonhaltige Elastomere, wie beispielsweise VMQ, auf Grund chemischer Indifferenzen und Unverträglichkeiten von Trennmittel und Elastomer getrennt werden können.

Die Aufgabe der vorliegenden Erfindung ist es daher ein semipermanentes und/oder permanentes silikonfreies Trennmittel, ein Verfahren zu dessen Herstellung sowie dessen Verwendung zur Verfügung zu stellen, mit welchem die oben genannten Nachteile und Einschränkungen vermieden werden können.

Diese Aufgabe wird durch ein Trennmittel gemäß Patentanspruch 1, ein Verfahren zur Herstellung des Trennmittels gemäß Patentanspruch 9 und eine Verwendung eines solchen Trennmittels gemäß Patentanspruch 12 gelöst.

Die erfindungsgemäße Lösung stellt ein semipermanentes und/oder permanentes silikonfreies Trennmittel, insbesondere Trennmittel für Silikonkautschuke in Form eines Gemisches aus Wasser und/oder Lösemittel und weiteren Komponenten zum Aufsprühen, Aufpinseln oder Eintauchen von sowohl heißen als auch kalten Metalloberflächen zur Fertigung von Elastomerbauteilen sowie ein Verfahren zur Herstellung eines solchen Trennmittels zur Verfügung, das einfach und kostengünstig herstellbar sowie einfach und nachhaltig in der Anwendung ist.

Insbesondere wird die Aufgabe der vorliegenden Erfindung durch ein Trennmittel, insbesondere Trennmittel für Silikonkautschuke, auf Wasser und/oder Lösungsmittelbasis zur Entformung von Elastomeren umfassend
A) Anionische und/oder nichtionische Fluortensid(e)
B) Anorganische und/oder organische Base(n)
C) organische(s) Fluorpolymer(e)
D) Wasser, Alkohol(e), Keton(e) und/oder Ester
gelöst, wobei die Komponenten A), B), C) und D) vollständig miteinander gemischt werden.

Ferner wird die erfindungsgemäße Aufgabe insbesondere durch ein Verfahren zum Herstellen eines solchen Trennmittels gelöst, wobei die Komponenten A), B), C) und D) bei Raumtemperatur vollständig und homogen miteinander vermischt werden.

Unter Mischen wird im Rahmen dieser Erfindung die physikalische Herstellung eines homogenen Gemisches bei Raumtemperatur und ohne Zusatzheizung verstanden.

Überraschend wurde erfindungsgemäß gefunden, dass ein silikonfreies Trennmittel bestehend aus einer Mischung anionischer und/oder nichtionischer Fluortenside, Alkoholen, Ketonen und/oder Estern, anorganischer und/oder organischer Basen, organischen Fluorpolymeren mit Wasser eine sehr hohe Trennleistung auf Metalloberflächen bewirkt.

Erfindungsgemäß werden die Komponenten A), B), C) und D) in Form von Pulvermischungen und/oder flüssigen Lösungen und/oder flüssigen Dispersionen und/oder Mischungen davon verwendet.

Bei dem erfindungsgemäßen silikonfreien Trennmittel liegen die Komponenten A) zu B) zu C) zu D) in folgendem Gewichtsprozentverhältnis vor,

| | A | B | C | D |
|---|---|---|---|---|
| | 0,05-20 | 0,5-20 | 0,05-20 | 99,4-40 |
| bevorzugt | 1-4 | 5-10 | 1-15 | 93-71 |
| besonders bevorzugt | 9,4-19,7 | 8,7-22,4 | 5,4-18,2 | 76,5-39,7 |

wobei die Summe des Mischungsverhältnisses der Komponenten immer 100 Gew.-% ist.

Gemäß einer Ausführungsform des erfindungsgemäßen silikonfreien Trennmittels ist die Komponente A) aus der Gruppe ausgewählt, die Folgendes umfasst:
- anionische und nichtionische Fluortenside umfassend:
   - Perfluoralkylsulfonsäuren;
   - Perfluoralkylthiocarbonsäuren;
   - Perfluoralkylthioetheralkylcarbonsäuren;
   - R_{f}CH₂CH₂SCH₂CH₂CO₂X,
   - (R_{f}CH₂CH₂O)P(O)(ONH₄)₂,
   - (R_{f}CH₂CH₂P(O)(ONH₄),
   - R_{f}CH₂CH₂O)P(O)(OH)₂,
   - (R_{f}CH₂CH₂O)₂P(O)(OH),
   - R_{f}CH₂CH₂O(CH₂CH₂O)ₓH,
   - R_{f}CH₂CH₂SO₃X,
   - (R_{f}CH₂CH₂O)ₘPO(O-NH₂+(CH₂CH₂OH)₂)ₙ,
   - CF₃-O-(CF₂CF(CF₃)-O)ₚ-(CF₂O)_{q}-R,
   - HOOCCF₂O(CF₂CF₂O)ₚ-(CF₂-O)_{q}-CF₂COOH;
      wobei

   R_{f} = F(CF₂CF₂)₃₋₈,

   R = CF₂-COOH, CF₂-COO- NH₄⁺, CF₂-C(OH)₂-CF₃

   X = H, NH₄, Li, Na, K,

   Alkyl = (CH₂)ₚ,

   mit

   m, n = 2-20,

   p, q = 1-20,
sowie Salze, insbesondere Ammonium-, Lithium-, Natrium- und/oder Kaliumsalze, und Mischungen der genannten Substanzen

Gemäß einer Ausführungsform werden die anionischen und/oder nichtionischen Fluortenside gemäß Komponente A) des erfindungsgemäßen silikonfreien Trennmittels in Form lösemittelhaltiger Lösungen, besonders bevorzugt in Form wässriger Lösungen eingesetzt.

Die anorganischen und/oder organischen Basen B) gemäß einer Ausführungsform des silikonfreien Trennmittels sind ausgewählt aus der Gruppe anorganischer und organischer Basen, wie Lithiumhydroxid, Natriumhydroxid, Kaliumhydroxid, Ammoniak, Ammoniumhydroxid, Calciumhydroxid, Magnesiumhydroxid, Aluminiumhydroxid, aus der Gruppe organischer Monoalkylamine, Dialkylamine, Trialkylamine, Alkyldiamine, Aminophenole, Oxazine, primäre Amide, sekundäre Amide, tertiäre Amide, Sulfonamide, Anilide und/oder Mischungen davon.

Die organischen Fluorpolymere C) gemäß einer Ausführungsform des silikonfreien Trennmittels sind ausgewählt aus der Gruppe fluorierter Polymerdispersionen und/oder Polytetrafluorethylendispersionen mit Wasser und/oder Lösungsmittel, beispielsweise gemäß Komponente D), insbesondere Dispersionen vom Typ Zonyl^{®} TE 3733, TE 3808, TE 3859, TE 3862, TE 3875, TE 3876, TE 3885, TE 3887, TE 3893, TE 3894, TE 6519 der Firma DuPont und/oder Mischungen davon.

Die Alkohole, Ketone und/oder Ester D) gemäß einer Ausführungsform des silikonfreien Trennmittels sind ausgewählt aus der Gruppe Alkohole, wie primärer Alkohole, sekundärer Alkohole, tertiärer Alkohole, primärer Alkandiole, sekundärer Alkandiole, Polyalkohole; aus der Gruppe der Ketone, wie Alkylketone und/oder Arylketone, Diketone; aus der Gruppe der Ester, wie Carbonsäuremonoalkytester, Dicarbonsäuredialkylester, Dicarbonsäuremonoalkylester, Lactone und/oder Lactame; Wasser, insbesondere demineralisiertes Wasser; und/oder Mischungen davon.

Die organischen Fluorpolymere C), insbesondere Teilchen der Komponente C), vorzugsweise PTFE-Dispersion, gemäß einer Ausführungsform des silikonfreien Trennmittels liegen in einer Korngröße von 5 - 100 µm, bevorzugt von 0,5 - 20 µm, besonders bevorzugt von 0,05 - 2 µm und/oder mit einer Kolloidkonzentration von 0,05 - 10 Gew.-%, bevorzugt von 0,1 - 70 Gew.-%, besonders bevorzugt von 1 - 95 Gew.-% vor.

Gemäß dem erfindungsgemäßen Verfahren zum Herstellen des Trennmittels werden die Komponenten A), B), C) und D) bei Raumtemperatur vollständig und homogen miteinander vermischt.

Hierzu werden die Komponenten A), B), C) und D) in Form einer flüssigen Dispersion, einer flüssigen Lösung und/oder gegebenenfalls eines festen Konzentrats verwendet, wobei die die anionischen und nichtionischen Fluortenside gemäß einer Ausführungsform als Feststoff und/oder als wässrige und/oder alkoholische Lösung eingesetzt werden.

Ferner wird die erfindungsgemäße Aufgabe durch eine Verwendung eines Trennmittels gemäß den vorstehenden Ausführungen zum Auftragen auf heiße oder kalte Oberflächen, insbesondere Metalloberflächen, vorzugsweise in einem Temperaturbereich von 65°C ≤ T ≤ 360°C, besonders bevorzugt in einem Temperaturbereich von 100°C ≤ T ≤ 300°C gelöst.

Weiter Ausführungsformen der Erfindung ergeben sich aus den Unteransprüchen.

Nachfolgend wird die Erfindung anhand von nicht einschränkenden Ausführungsbeispielen näher beschrieben.

### Beispiel 1

In einem 1000 ml Becherglas wurden zunächst 10,0 g Methylethylketon und 10,0 g pulverförmiges Fluortensid (R_{f}CH₂CH₂O)P(O)(OH)₂ mit R_{f} = F(CF₂CF₂)₃₋₈ vollständig miteinander vermischt. Im Anschluss wurde der Lösung 2,0 g Natriumhydroxid, 9,0 g PTFE Dispersion Zonyl^{®} TE 3808 der Firma DuPont sowie 969,0 g demineralisiertes Wasser zugegeben und für 30 Minuten gerührt. Die klare, leicht gelbliche Lösung wurde anschließend auf ein gesäubertes, poliertes und planes Stahlplattenpaar mit den Maßen 100 x 100 x 6 mm bei 175°C einmalig appliziert.

Dieses Trennmittelgemisch wurde auf seine Trennleistung hin mit den Elastomeren VMQ (Shorehärte A 30) und HNBR (Shorehärte A 50) getestet, wobei in aufeinanderfolgenden Zyklen mit einer Laborpresse solange gepresst, respektive geformt wurde, bis keine Trennung mehr festgestellt werden konnte. Als Referenz wurde ein silikonhaltiges Trennmittel verwendet.

Die hierbei erzielte Trennleistung mit dem Trennmittelgemisch gemäß Beispiel 1 betrug bei VMQ 65 Zyklen und bei HNBR 80 Zyklen. Die Referenz zeigte bei VMQ 0 Zyklen und bei HNBR 50 Zyklen.

### Beispiel 2:

In einem 1000 ml Becherglas wurden zunächst 12,0 g 2-Methyl-1-propanol und 5,5 g pulverförmiges Fluortensid (R_{f}CH₂CH₂O)₂P(O)(OH) mit R_{f} = F(CF₂CF₂)₃₋₈ vollständig miteinander vermischt. Im Anschluss wurde der Lösung 3,6 g Fluortensid R_{f}CH₂CH₂SO₃X mit R_{f} = F(CF₂CF₂)₃₋₈ und X = H, 2,1 g Monoethanolamin, 8,7 g PTFE Dispersion Zonyl^{®} TE 3894 der Firma DuPont sowie 968,1 g demineralisiertes Wasser zugegeben und für 30 Minuten gerührt. Die klare, leicht gelbliche Lösung wurde anschließend auf ein gesäubertes, poliertes und planes Stahlplattenpaar mit den Maßen 100 x 100 x 6 mm bei 175°C einmalig appliziert.

Dieses Trennmittelgemisch wurde auf seine Trennleistung hin mit den Elastomeren VMQ (Shorehärte A 30) und HNBR (Shorehärte A 50) getestet, in dem mit einer Laborpresse solange gepresst (Zyklen) wurde, bis keine Trennung mehr festgestellt werden konnte. Als Referenz wurde ein silikonhaltiges Trennmittel verwendet.

Die hierbei erzielte Trennleistung mit dem Trennmittelgemisch gemäß Beispiel 2 betrug bei VMQ 55 Zyklen und bei HNBR 98 Zyklen. Die Referenz zeigte bei VMQ 0 Zyklen und bei HNBR 50 Zyklen.

**Tabelle 1**

| Komponenten im Trennmittelgemisch (g) | Beispiele | | | |
|---|---|---|---|---|
| | 3 | 4 | 5 | 6 |
| (R_{f}CH₂CH₂O)₂P(O)(OH) R_{f}CH₂CH₂SO₃X | 2,8 | | 3,1 | 6,7 |
| CF₃₋O-(CF₂CF(CF₃)- | | | | |
| O)ₙ-(CF₂O)ₘ-R | | 3,4 | | |
| 2-Methyl-1-propanol | | 8,4 | | 10,9 |
| Methylethylketon | | | 10,2 | |
| Aceton | 5,8 | | | |
| Natriumhydroxid | | | 1,6 | |
| Monoethanolamin | | | | 4,4 |
| Ethylendiamin | 1,9 | | | |
| PTFE Zonyl^{®} TE3808 | | 5,4 | 3,3 | 1,2 |
| PTFE Zonyl^{®} TE3894 | 4,8 | | | 2,5 |
| Wasser demineral. | 847,0 | 982,8 | 981,8 | 974,3 |
| | | | | |
| Applikation: | 1x | 1x | 1x | 1x |
| Presswerkzeug: | Stahl | Stahl | Stahl | Stahl |
| Temperatur: | 160°C | 185°C | 180°C | 170°C |
| | | | | |
| Elastomermischung: | CR* | SBR* | EPDM* | IIR* |
| | | | | |
| Erzielte Zyklen: | 44 | 68 | 50 | 86 |

| | | | | |
|---|---|---|---|---|
| CR*: Chloropren-Kautschuk mit Shore A Härte 30 SBR*: Styrol-Butadien-Kautschuk mit Shore A Härte 45 EPDM*: Ethylen-Propylen-Dien-Kautschuk mit Shore A Härte 50 IIR*: Butyl-Kautschuk mit Shore A Härte 40 | | | | |

In sämtlichen Beispielen konnte gezeigt werden, dass das erfindungsgemäße silikonfreie Trennmittel zur Entformung von verschiedenen Elastomeren zu herkömmlichen silikonhaltigen Trennmitteln gemäß dem Stand der Technik überlegen ist und zu sehr guter Trennleistung führt.

## Patentansprüche

1. Trennmittel, insbesondere Trennmittel für Silikonkautschuke, auf Wasser und/oder Lösungsmittelbasis zur Entformung von Elastomeren umfassend
A) Anionische und/oder nichtionische Fluortensid(e)
B) Anorganische und/oder organische Base(n)
C) organische(s) Fluorpolymer(e)
D) Wasser, Alkohol(e), Keton(e) und/oder Ester.

2. Trennmittel nach Anspruch 1,
**dadurch gekennzeichnet, dass**
die Komponenten A) zu B) zu C) zu D) im Gewichtsprozentverhältnis
| | A | B | C | D |
|---|---|---|---|---|
| | 0,05-20 | 0,5-20 | 0,05-20 | 99,4-40 |
| bevorzugt | 1-4 | 5-10 | 1-15 | 93-71 |
| besonders bevorzugt | 9,4-19,7 | 8,7-22,4 | 5,4-18,2 | 76,5-39,7 |
vorliegen, wobei die Summe des Mischungsverhältnisses der Komponenten immer 100 Gew.-% ist.

3. Trennmittel nach einem der vorhergehenden Ansprüche, **dadurch gekennzeichnet, dass** die Komponenten A), B), C) und D) vollständig und homogen miteinander vermischt sind.

4. Trennmittel nach einem der vorhergehenden Ansprüche, **dadurch gekennzeichnet, dass** die Komponente A) aus der Gruppe ausgewählt ist, die Folgendes umfasst:
- anionische und nichtionische Fluortenside umfassend:
- Perfluoralkylsulfonsäuren;
- Perfluoralkylthiocarbonsäuren;
- Perfluoralkylthioetheralkylcarbonsäuren;
- R_{f}CH₂CH₂SCH₂CH₂CO₂X,
- (R_{f}CH₂CH₂O)P(O)(ONH₄)₂,
- (R_{f}CH₂CH₂O)₂P(O)(ONH₄),
- R_{f}CH₂CH₂O)P(O)(OH)₂,
- (R_{f}CH₂CH₂O)₂P(O)(OH),
- R_{f}CH₂CH₂O(CH₂CH₂O)ₓH,
- R_{f}CH₂CH₂SO₃X,
- (R_{f}CH₂CH₂O)ₘPO(O-NH₂⁺(CH₂CH₂OH)₂)ₙ,
- CF₃-O-(CF₂CF(CF₃)-O)ₚ-(CF₂O)_{q}-R,
- HOOCCF₂O(CF₂CF₂O)ₚ-(CF₂-O)_{q}-CF₂COOH;
wobei
R_{f} = F(CF₂CF₂)₃₋₈,
R = CF₂-COOH, CF₂-COO- NH₄⁺, CF₂-C(OH)₂-CF₃
X = H, NH₄, Li, Na, K,
Alkyl = (CH₂)ₚ, mit
m, n = 2-20,
p, q = 1-20,
sowie Salze und Mischungen der genannten Substanzen.

5. Trennmittel nach einem der vorhergehenden Ansprüche,
**dadurch gekennzeichnet, dass**
die Komponente B) aus der Gruppe ausgewählt ist, die Folgendes umfasst: anorganische und organische Basen, wie Lithiumhydroxid, Natriumhydroxid, Kaliumhydroxid, Ammoniak, Ammoniumhydroxid, Calciumhydroxid, Magnesiumhydroxid, Aluminiumhydroxid; Monoalkylamine, Dialkylamine, Trialkylamine, Alkyldiamine, Aminophenole, Oxazine, primäre Amide, sekundäre Amide, tertiäre Amide, Sulfonamide, Anilide; und Mischungen der genannten Substanzen.

6. Trennmittel nach einem der vorhergehenden Ansprüche,
**dadurch gekennzeichnet, dass**
die Komponente C) aus der Gruppe ausgewählt ist, die Folgendes umfasst: fluorierte Polymerdispersionen und/oder Polytetrafluorethylendispersionen mit Wasser und/oder Lösungsmittel.

7. Trennmittel nach einem der vorhergehenden Ansprüche,
**dadurch gekennzeichnet, dass**
die Komponente D) aus der Gruppe ausgewählt ist, die Folgendes umfasst: Alkohole, wie primären Alkohole, sekundären Alkohole, tertiäre Alkohole; primäre Alkandiole; sekundäre Alkandiole; Polyalkohole; Ketone, wie Alkylketone, Arylketone, Diketone; Ester, wie Carbonsäuremonoalkylester, Carbonsäuredialkylester, Dicarbonsäureester, Lactone, Lactame; Wasser, insbesondere demineralisiertes Wasser; und Mischungen der genannten Substanzen.

8. Trennmittel nach einem der vorhergehenden Ansprüche,
**dadurch gekennzeichnet, dass**
Teilchen der Komponente C), insbesondere PTFE-Dispersion, eine Korngröße im Bereich von 5 µm - 100 µm, bevorzugt im Bereich von 0,5 µm - 20 µm und besonders bevorzugt im Bereich von 0,05 µm - 2 µm aufweisen.

9. Verfahren zum Herstellen eines Trennmittels gemäß einem der Ansprüche 1 bis 8,
**dadurch gekennzeichnet, dass**
die Komponenten A), B), C) und D) bei Raumtemperatur vollständig und homogen miteinander vermischt werden.

10. Verfahren nach Anspruch 9,
**dadurch gekennzeichnet, dass**
die Komponenten A), B), C) und D) in Form einer flüssigen Dispersion, einer flüssigen Lösung und/oder gegebenenfalls eines festen Konzentrats verwendet werden.

11. Verfahren nach einem der vorhergehenden Ansprüche 9 bis 10,
**dadurch gekennzeichnet, dass**
die anionischen und nichtionischen Fluortenside als Feststoff und/oder als wässrige und/oder alkoholische Lösung verwendet werden.

12. Verwendung eines Trennmittels gemäß einem der Ansprüche 1 bis 8 zum Auftragen auf heiße oder kalte Oberflächen, insbesondere Metalloberflächen, vorzugsweise in einem Temperaturbereich von 65°C ≤ T ≤ 360°C, besonders bevorzugt in einem Temperaturbereich von 100°C ≤ T≤ 300°C-.

## Claims

1. Release agent, specifically release agent for silicone rubbers, on a water and/or solvent basis for demolding elastomers, comprising:
A) anionic and/or nonionic fluorinated tenside(s)
B) inorganic and/or organic base(s)
C) organic fluorocarbon polymer(s)
D) water, alcohol(s), ketone(s) and/or esters.

2. Release agent according to claim 1,
**characterized in that**
the components A) to B) to C) to D) are provided in a weight percentage ratio
| | A | B | C | D |
|---|---|---|---|---|
| | 0.05-20 | 0.5-20 | 0.05-20 | 99.4-40 |
| preferred | 1-4 | 5-10 | 1-15 | 93-71 |
| particularly preferred | 9.4-19.7 | 8.7-22.4 | 5.4-18.2 | 76.5-39.7 |
wherein the sum of the mixing ratio of the components is always 100 percent by weight.

3. Release agent according to one of the preceding claims,
**characterized in that**
the components A), B), C) and D) are mixed with each other completely and homogeneously.

4. Release agent according to one of the preceding claims,
**characterized in that**
component A) is selected from the group comprising:
- anionic and nonionic fluorinated tensides, comprising:
- perfluoroalkyl sulfonic acids;
- perfluoroalkyl thiocarboxylic acids;
- perfluoroalkyl thioetheralkyl carboxylic acids;
- R_{f}CH₂CH₂SCH₂CH₂CO₂X,
- (R_{f}CH₂CH₂O)P(O)(ONH₄)₂,
- (R_{f}CH₂CH₂O)₂P(O)(ONH₄),
- R_{f}CH₂CH₂O)P(O)(OH)₂,
- (R_{f}CH₂CH₂O)₂P(O)(OH),
- R_{f}CH₂CH₂O(CH₂CH₂O)ₓH,
- R_{f}CH₂CH₂SO₃X,
- (R_{f}CH₂CH₂O)ₘPO(O-NH₂⁺(CH₂CH₂OH)₂)ₙ,
- CF₃-O-(CF₂CF(CF₃)-O)ₚ-(CF₂O)_{q}-R,
- HOOCCF₂O(CF₂CF₂O)ₚ-(CF₂-O)_{q}-CF₂COOH;
wherein
R_{f} = F(CF₂CF₂)₃₋₈,
R = CF₂-COOH, CF₂-COO- NH₄⁺, CF₂-C(OH)₂-CF₃
X = H, NH₄, Li, Na, K,
alkyl = (CH₂)ₚ, with
m, n = 2-20,
p, q = 1-20,
as well as salts and mixtures of the aforementioned substances.

5. Release agent according to one of the preceding claims,
**characterized in that**
component B) is selected from the group comprising: inorganic and organic bases, such as lithium hydroxide, sodium hydroxide, potassium hydroxide, ammonia, ammonium hydroxide, calcium hydroxide, magnesium hydroxide, aluminum hydroxide; monoalkylamines, dialkylamines, trialkylamines, alkyldiamines, aminophenols, oxazines, primary amides, secondary amides, tertiary amides, sulfonamides, anilides; and mixtures of the aforementioned substances.

6. Release agent according to one of the preceding claims,
**characterized in that**
component C) is selected from the group comprising: fluorinated polymer dispersions and/or polytetrafluorethylene dispersions with water and/or solvent.

7. Release agent according to one of the preceding claims,
**characterized in that**
component D) is selected from the group comprising: alcohols, such as primary alcohols, secondary alcohols, tertiary alcohols; primary alkane diols; secondary alkane diols; polyalcohols; ketones, such as alkyl ketones, aryl ketones, diketones; esters, such as carboxylic acid monoalkyl esters, carboxylic acid dialkyl esters, dicarboxylic acid esters, lactones, lactames; water, specifically demineralized water; and mixtures of the aforementioned substances.

8. Release agent according to one of the preceding claims,
**characterized in that**
particles of component C), specifically PTFE dispersion, have a grain size in the range of 5 µm to 100 µm, preferably in the range of 0.5 µm to 20 µm, and particularly preferably in the range of 0.05 µm to 2 µm.

9. Method for producing a release agent according to one of claims 1 to 8,
**characterized in that**
components A), B), C) and D) are mixed with each other completely and homogeneously at room temperature.

10. Method according to claim 9,
**characterized in that**
components A), B), C) and D) are used in the form of a liquid dispersion, a liquid solution and/or a solid concentrate, if applicable.

11. Method according to one of the preceding claims 9 to 10,
**characterized in that**
the anionic and nonionic fluorinated tensides are used as solid and/or as aqueous and/or alcoholic solution.

12. Use of a release agent according to one of claims 1 to 8 for being applied to hot or cold surfaces, specifically metal surfaces, preferably in a temperature range of 65°C ≤T≤ 360°C, particularly preferably in a temperature range of 100°C ≤ T≤300°C.

## Revendications

1. Agent de séparation, en particulier pour caoutchoucs de silicone, à base d'eau et/ou de solvant, destiné au démoulage d'élastomères, comportant
A) un (des) fluortenside(s) anionique(s) et/ou non ionique(s)
B) une (des) base(s) anorganique(s) et/ou organique(s)
C) un (des) fluorpolymère(s) organique(s)
D) de l'eau, de l'alcool (des alcools), une (des) cétone(s) et/ou un (des) ester(s).

2. Agent de séparation selon la revendication 1,
**caractérisé en ce que**
les constituants A) par rapport à B) par rapport à C) par rapport à D) sont dans un rapport de pourcentage de poids de
| | A | B | C | D |
|---|---|---|---|---|
| | 0,05 - 20 | 0,5 - 20 | 0,05 - 20 | 99,4 - 40 |
| préférentiellement | 1 - 4 | 5 - 10 | 1 - 15 | 93 - 71 |
| plus préférentiellement | 9,4 - 19,7 | 8,7 - 22,4 | 5,4 - 18,2 | 76,5 - 39,7 |
la somme du rapport de mélange des constituants étant toujours égale à 100 % en poids.

3. Agent de séparation selon l'une des revendications précédentes,
**caractérisé en ce que**
les constituants A), B), C) et D) se mélangent entre eux de façon complète et homogène.

4. Agent de séparation selon l'une des revendications précédentes,
**caractérisé en ce que**
le constituant A) est sélectionné dans le groupe comportant les éléments suivants :
- fluortensides anioniques et non ioniques comportant :
- acides perfluoralkylsulfoniques ;
- acides perfluoralkylthiocarboniques ;
- acides perfluoralkylthioétheralkylcarboniques ;
- R_{f}CH₂CH₂SCH₂CH₂CO₂X,
- (R_{f}CH₂CH₂O) P(O)(ONH₄)₂,
- (R_{f}CH₂CH₂O)₂P(O)(ONH₄),
- (R_{f}CH₂CH₂O)P(O)(OH)₂,
- (R_{f}CH₂CH₂O)₂P(O)(OH),
- R_{f}CH₂CH₂O(CH₂CH₂O)ₓH,
- R_{f}CH₂CH₂SO₃X,
- (R_{f}CH₂CH₂O)ₘPO(O-NH₂⁺(CH₂CH₂OH)₂)ₙ,
- CF₃-O-(CF₂CF(CF₃)-O)ₚ-(CF₂O)_{q}-R,
- HOOCCF₂O(CF₂CF₂O)ₚ-(CF₂-O)_{q}-CF₂COOH ;
sachant que
R_{f} = F(CF₂CF₂)₃₋₈,
R = CF₂-COOH, CF₂-COO- NH₄⁺, CF₂-C(OH)₂-CF₃
X = H, NH₄, Li, Na, K,
alkyle = (CH₂)ₚ, où
m,n = 2-20,
p, q = 1 - 20,
ainsi que des sels et mélanges des substances citées.

5. Agent de séparation selon l'une des revendications précédentes,
**caractérisé en ce que**
le constituant B) est sélectionné dans le groupe comportant les éléments suivants : bases anorganiques et organiques, telles qu'hydroxyde de lithium, hydroxyde de sodium, hydroxyde de potassium, ammoniac, hydroxyde d'ammonium, hydroxyde de calcium, hydroxyde de magnésium, hydroxyde d'aluminium ; monoalkylamines, dialkylamines, trialkylamines, alkyldiamines, aminophénols, oxazines, amides primaires, amides secondaires, amides tertiaires, sulfonamides, anilides ; et les mélanges des substances citées.

6. Agent de séparation selon l'une des revendications précédentes,
**caractérisé en ce que**
le constituant C) est sélectionné dans le groupe comportant les éléments suivants : dispersions fluorées de polymère et/ou dispersions de polytétrafluoréthylène avec de l'eau et/ou du solvant.

7. Agent de séparation selon l'une des revendications précédentes,
**caractérisé en ce que**
le constituant D) est sélectionné dans le groupe comportant les éléments suivants : alcools, tels qu'alcools primaires, alcools secondaires, alcools tertiaires ; alkandioles primaires ; alkandioles secondaires ; polyalcools ; cétones, telles qu'alkylcétones, arylcétones, dicétones ; esters, tels que monoalkylesters d'acide carbonique, dialkylesters d'acide carbonique, diesters d'acide carbonique, lactones, lactames ; eau, en particulier eau déminéralisée ; et les mélanges des substances citées.

8. Agent de séparation selon l'une des revendications précédentes,
**caractérisé en ce que**
des particules du constituant C), en particulier une dispersion de PTFE, présentent une granulométrie comprise entre 5 µm et 100 µm, préférentiellement entre 0,5 µm et 20 µm et plus préférentiellement entre 0,05 µm et 2 µm.

9. Procédé de fabrication d'un agent de séparation selon l'une des revendications 1 à 8,
**caractérisé en ce que**
les constituants A), B), C) et D) se mélangent entre eux de façon complète et homogène à température ambiante.

10. Procédé selon la revendication 9,
**caractérisé en ce que**
les constituants A), B), C) et D) sont utilisés sous forme d'une dispersion liquide, d'une solution liquide et/ou éventuellement d'un concentré solide.

11. Procédé selon l'une des revendications précédentes 9 à 10,
**caractérisé en ce que**
les fluortensides anioniques et non ioniques sont utilisés comme matière solide et/ou comme solution aqueuse et/ou alcoolique.

12. Utilisation d'un agent de séparation selon l'une des revendications 1 à 8, destiné à être appliqué sur des surfaces chaudes ou froides, en particulier des surfaces métalliques, préférentiellement dans une plage de température de 65°C ≤ T ≤ 360°C, plus préférentiellement dans une plage de température de 100°C ≤ T≤ 300°C.
